# FASCICULE DE BREVET EUROPEEN

(11) **EP 1 893 682 B1**
(45) Date de publication et mention de la délivrance du brevet: **22.10.2008**
(21) Numéro de dépôt: 06753567.4
(22) Date de dépôt: 11.05.2006
(51) Int. Cl.: C08K 5/5455, B60C 1/00

(54) **COMPOSITION DE CAOUTCHOUC POUR PNEUMATIQUE COMPORTANT UN AGENT DE COUPLAGE ORGANOSILOXANE**
KAUTSCHUKZUSAMMENSSETZUNG FÜR REIFEN, ENTHALTEND EINEN ORGANOSILOXAN-HAFTVERMITTLER
RUBBER COMPOSITION FOR TYRE COMPRISING AN ORGANOSILOXANE COUPLING AGENT

(30) Priorité: 26.05.2005 FR 0505518
(43) Date de publication de la demande: 05.03.2008
(73) Titulaire: Société de Technologie Michelin, 63000 Clermont-Ferrand (FR); Michelin Recherche et Technique S.A., 1763 Granges-Paccot (CH)
(72) Inventeur: ARAUJO DA SILVA, José Carlos, F-63430 Pont du Chateau (FR); LONGCHAMBON, Karine, F-63110 Beaumont (FR); STERIN, Sébastien, F-69450 Saint Cyr au Mont d'or (FR)
(74) Mandataire: Ribière, Joel
(86) Numéro de dépôt international: PCT/EP2006/004435
(87) Numéro de publication internationale: WO 2006/125532

(56) Documents cités:
- EP-A- 0 849 333
- US-A- 4 118 367
- US-A- 5 185 418
- US-A1- 2004 220 307
- US-B1- 6 372 843

## Description

La présente invention est relative aux compositions d'élastomères diéniques renforcées d'une charge inorganique telle que silice, destinées à la fabrication de pneumatiques ou de produits semi-finis pour pneumatiques, en particulier aux bandes de roulement de ces pneumatiques.

Elle se rapporte plus particulièrement aux agents de couplage destinés à assurer la liaison, dans de telles compositions, entre ces élastomères diéniques et ces charges inorganiques renforçantes.

De façon à réduire la consommation de carburant et les nuisances émises par les véhicules à moteur, des efforts importants ont été réalisés par les concepteurs de pneumatiques afin d'obtenir des pneumatiques présentant à la fois une très faible résistance au roulement, une adhérence améliorée tant sur sol sec que sur sol humide ou enneigé, ainsi qu'une bonne résistance à l'usure.

Ceci a été rendu possible notamment grâce à la mise au point de nouvelles compositions d'élastomères renforcées de charges inorganiques spécifiques qualifiées de "renforçantes", présentant une haute dispersibilité, capables de rivaliser avec le noir de carbone conventionnel du point de vue renforçant, et offrant en outre à ces compositions une hystérèse réduite synonyme d'une plus basse résistance au roulement pour les pneumatiques les comportant. De telles compositions de caoutchouc, comportant des charges inorganiques renforçantes par exemple du type silices ou alumines, ont par exemple été décrites dans les brevets ou demandes de brevet EP 501 227 ou US 5 227 425, EP 735 088 ou US 5 852 099, EP 810 258 ou US 5 900 449, EP 881 252, WO99/02590, WO99/06480, WO00/05300, WO00/05301, WO02/10269.

La mise en oeuvre (ou "processabilité") des compositions de caoutchouc contenant de telles charges reste néanmoins plus difficile que pour les compositions de caoutchouc chargées conventionnellement de noir de carbone. En particulier, il est nécessaire d'utiliser un agent de couplage, encore appelé agent de liaison, qui a pour fonction d'assurer la connexion entre la surface des particules de charge inorganique et l'élastomère, tout en facilitant la dispersion de cette charge inorganique au sein de la matrice élastomérique.

Par agent de "couplage" (charge inorganique/élastomère), on rappelle ici que doit être entendu, de manière connue, un agent apte à établir une connexion suffisante, de nature chimique et/ou physique, entre la charge inorganique et l'élastomère diénique.

Un tel agent de couplage, au moins bifonctionnel, a comme formule générale simplifiée « Y-W-X », dans laquelle:
- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice) ;
- X représente un groupe fonctionnel (fonction "X") capable de se lier physiquement et/ou chimiquement à l'élastomère diénique, par exemple par l'intermédiaire d'un atome de soufre ;
- W représente un groupe divalent permettant de relier "Y" et "X".

Les agents de couplage ne doivent en particulier pas être confondus avec de simples agents de recouvrement de la charge inorganique qui, de manière connue, peuvent comporter la fonction Y active vis-à-vis de la charge inorganique mais sont en tout cas dépourvus de la fonction X active vis-à-vis de l'élastomère diénique.

Des agents de couplage, notamment (silice/ élastomère diénique), ont été décrits dans un grand nombre de documents brevet, les plus connus étant des silanes sulfurés bifonctionnels, en particulier des alkoxysilanes, considérés aujourd'hui comme les produits apportant, pour des vulcanisats chargés à la silice, le meilleur compromis en terme de sécurité au grillage, de facilité de mise en oeuvre et de pouvoir renforçant. Parmi ces silanes sulfurés, doit être cité tout particulièrement le tétrasulfure de bis 3-triéthoxysilylpropyle (en abrégé TESPT), agent de couplage de référence dans les pneumatiques à basse résistance au roulement qualifiés de "Pneus Verts" pour l'économie d'énergie offerte (concept "*Energy-saving Green Tyres*").

On cherche toujours aujourd'hui à améliorer les performances de ces agents de couplage pour charge inorganique telle que silice.

Le besoin est particulièrement présent dans le cas de matrices de caoutchouc à base d'un élastomère isoprénique telles que celles utilisées dans les bandes de roulement de pneumatiques Poids-lourd, dans lesquelles, de manière connue, une liaison efficace avec l'élastomère est beaucoup plus difficile à obtenir, comparativement à l'emploi de noir de carbone.

Poursuivant leurs recherches, les Demanderesses ont découvert un nouvel agent de couplage pour charge inorganique qui permet d'améliorer de manière très sensible, en présence d'un élastomère isoprénique, l'hystérèse des compositions de caoutchouc, par voie de conséquence la résistance au roulement des pneumatiques et donc la consommation d'énergie des véhicules automobiles équipés de tels pneumatiques.

En conséquence, un premier objet de l'invention concerne une composition de caoutchouc destinée à la fabrication de pneumatiques ou de produits semi-finis pour pneumatiques, à base d'au moins un élastomère isoprénique, une charge inorganique à titre de charge renforçante, un agent de couplage organosiloxane polyfonctionnel comportant par molécule, pour assurer la liaison entre la charge inorganique renforçante et l'élastomère isoprénique, greffés sur ses atomes de silicium, d'une part au moins une fonction hydroxyle ou hydrolysable lui permettant de se greffer sur la charge inorganique renforçante, d'autre part, au moins un groupe porteur d'au moins un groupe fonctionnel lui permettant de se greffer sur l'élastomère isoprénique, ladite composition étant caractérisée en ce que ledit groupe fonctionnel est un groupe azo-dicarbonyle -CO-N=N-CO-.

L'invention a également pour objet un procédé pour préparer une composition de caoutchouc destinée à la fabrication de pneumatiques ou de produits semi-finis pour pneumatiques, présentant une hystérèse améliorée, cette composition étant à base d'un élastomère isoprénique, d'une charge inorganique renforçante et d'un agent de couplage organosiloxane polyfonctionnel, ledit procédé comportant les étapes suivantes :
- incorporer à un élastomère isoprénique, au cours d'une première étape dite "non-productive", en une ou plusieurs fois, au moins une charge inorganique renforçante et la totalité ou une première partie de l'agent de couplage organosiloxane assurant la liaison entre ladite charge inorganique renforçante et l'élastomère isoprénique, en malaxant thermomécaniquement le tout, en une ou plusieurs fois, jusqu'à atteindre une température maximale comprise entre 110°C et 190°C ;
- refroidir l'ensemble à une température inférieure à 100°C ;
- incorporer ensuite, au cours d'une seconde étape dite "productive", le cas échéant la seconde partie de l'agent de couplage, puis un système de réticulation (ou vulcanisation) ;
- malaxer le tout jusqu'à une température maximale inférieure à 120°C,
et étant caractérisé en ce ledit agent de couplage organosiloxane répond à la définition donnée ci-dessus.

L'invention a également pour objet l'utilisation d'une composition selon l'invention pour la fabrication de pneumatiques ou de produits semi-finis en caoutchouc destinés à ces pneumatiques, ces produits semi-finis étant notamment choisis dans le groupe constitué par les bandes de roulement, les nappes d'armature de sommet, les flancs, les nappes d'armature de carcasse, les bourrelets, les protecteurs, les sous-couches, les blocs de caoutchouc et autres gommes internes, notamment les gommes de découplage, destinés à assurer la liaison ou l'interface entre les zones précitées des pneumatiques.

L'invention a également pour objet ces pneumatiques et ces produits semi-finis eux-mêmes, lorsqu'ils comportent une composition de caoutchouc conforme à l'invention. L'invention concerne en particulier les bandes de roulement de pneumatiques, ces bandes de roulement pouvant être utilisées lors de la fabrication de pneumatiques neufs ou pour le rechapage de pneumatiques usagés ; grâce aux compositions de l'invention, ces bandes de roulement présentent à la fois une résistance élevée à l'usure et une résistance au roulement réduite.

La composition conforme à l'invention est particulièrement adaptée à la fabrication de pneumatiques ou de bandes de roulement de pneumatiques destinés à équiper des véhicules de tourisme, camionnettes, véhicules 4x4 (à 4 roues motrices), deux roues, "Poids-lourd" - c'est-à-dire métro, bus, engins de transport routier (camions, tracteurs, remorques), véhicules hors-la-route) - , avions, engins de génie civil, agraire, ou de manutention.

L'invention ainsi que ses avantages seront aisément compris à la lumière de la description et des exemples de réalisation qui suivent.

### I. MESURES ET TESTS UTILISES

Les compositions de caoutchouc sont caractérisées, avant et après cuisson, comme indiqué ci-après.

### I-1. Rhéométrie:

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de vulcanisation. Les mesures sont traitées selon la norme DIN 53529 - partie 2 (mars 1983) : Ti est le délai d'induction, c'est-à-dire le temps nécessaire au début de la réaction de vulcanisation ; T_{α} (par exemple T₉₉) est le temps nécessaire pour atteindre une conversion de α%, c'est-à-dire α% (par exemple 99%) de l'écart entre les couples minimum et maximum. On mesure également la constante de vitesse de conversion notée K (exprimée en min⁻¹), d'ordre 1, calculée entre 30% et 80% de conversion, qui permet d'apprécier la cinétique de vulcanisation.

### I-2. Essais de traction

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e. après un cycle d'accommodation) les modules sécants nominaux (ou contraintes apparentes, en MPa) à 10% d'allongement (notés M10), 100% d'allongement (M100) et 300% d'allongement (M300). On mesure également les contraintes à la rupture (en MPa) et les allongements à la rupture (en %).

### I-3. Propriétés dynamiques

Les propriétés dynamiques ΔG* et tan(δ)ₘₐₓ sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, à 60°C. On effectue un balayage en amplitude de déformation de 0,1 à 50% (cycle aller), puis de 50% à 1% (cycle retour). Les résultats exploités sont le module complexe de cisaillement dynamique (G*) et le facteur de perte tan δ. Pour le cycle retour, on indique la valeur maximale de tan δ observée (tan(δ)ₘₐₓ), ainsi que l'écart de module complexe (ΔG*) entre les valeurs à 0,1% et à 50% de déformation (effet Payne).

### II. DESCRIPTION DETAILLEE DE L'INVENTION

Les compositions de caoutchouc selon l'invention sont à base d'au moins : un (c'est-à-dire au moins un) élastomère isoprénique ; une (au moins une) charge inorganique à titre de charge renforçante ; un (au moins un) agent de couplage organosiloxane tel que décrit en détail ci-après, assurant la liaison entre ladite charge inorganique et l'élastomère isoprénique.

Bien entendu, par l'expression composition "à base de", il faut entendre une composition comportant le mélange et/ou le produit de réaction des différents constituants utilisés, certains de ces constituants de base (par exemple l'agent de couplage et la charge inorganique renforçante) étant susceptibles de, ou destinés à, réagir entre eux, au moins en partie, lors des différentes phases de fabrication des compositions, en particulier au cours de leur vulcanisation (cuisson).

Dans la présente description, sauf indication expresse différente, tous les pourcentages (%) indiqués sont des % en masse.

### II-1. Elastomère isoprénique

Rappelons tout d'abord que par élastomère (ou caoutchouc, les deux termes étant ici considérés comme synonymes) "diénique", doit être entendu par définition un élastomère issu au moins en partie (i.e., un homopolymère ou un copolymère) de monomères diènes c'est-à-dire de monomères porteurs de deux doubles liaisons carbone-carbone, conjuguées ou non.

Par élastomère diénique "essentiellement insaturé", on entend ici un élastomère diénique issu au moins en partie de monomères diènes conjugués, ayant un taux de motifs ou unités d'origine diénique (diènes conjugués) qui est supérieur à 15% (% en moles). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions générales étant données, on entend dans la présente demande par "élastomère isoprénique", de manière connue, un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR).

Cet élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%.

En coupage avec l'élastomère isoprénique ci-dessus, les compositions de l'invention peuvent contenir des élastomères diéniques autres qu'isopréniques, à titre minoritaire (i.e., pour moins de 50% en poids) ou majoritaire (i.e., pour plus de 50% en poids), selon les applications visées. Elles pourraient également comporter des élastomères non diéniques, voire des polymères autres que des élastomères, par exemple des polymères thermoplastiques. A titre d'exemples de tels élastomères diéniques non isopréniques, on citera notamment tout élastomère diénique fortement insaturé, choisi en particulier dans le groupe constitué par les polybutadiènes (BR), les copolymères de butadiène, notamment les copolymères de styrène-butadiène (SBR), et les mélanges de ces différents élastomères.

L'amélioration du couplage apportée par l'invention est particulièrement notable sur des compositions de caoutchouc dont la base élastomérique est constituée majoritairement (i.e., à plus de 50% en poids) de polyisoprène, i.e., de caoutchouc naturel ou de polyisoprène de synthèse.

La composition conforme à l'invention est particulièrement destinée à une bande de roulement pour pneumatique, qu'il s'agisse d'un pneumatique neuf ou usagé (rechapage), en particulier pour pneumatique destiné à des véhicules industriels ou utilitaires tels que "Poids-lourd" - i.e., métro, bus, engins de transport routier (camions, tracteurs, remorques), véhicules hors-la-route.

Dans un tel cas, le meilleur mode de réalisation connu de l'invention consiste à utiliser comme élastomère isoprénique uniquement du polyisoprène, plus préférentiellement du caoutchouc naturel. C'est pour de telles conditions que l'on a observé les meilleures performances en termes de résistance au roulement et de résistance à l'usure.

Mais l'homme du métier des pneumatiques comprendra que divers coupages entre élastomère isoprénique, notamment caoutchouc naturel, et d'autres élastomères diéniques, en particulier SBR et/ou BR, sont également possibles dans des compositions de caoutchouc conformes à l'invention utilisables par exemple pour diverses parties du pneumatique autres que sa bande de roulement, par exemple de nappes d'armature de sommet (par exemple de nappes de travail, nappes de protection ou nappes de frettage), de nappes d'armature de carcasse, de flancs, de bourrelets, de protecteurs, de sous-couches, de blocs de caoutchouc et autres gommes internes assurant l'interface entre les zones précitées des pneumatiques.

Selon un autre mode de réalisation préférentiel de l'invention, notamment lorsqu'elle est destinée à un flanc de pneumatique ou à une gomme intérieure étanche de pneumatique sans chambre (ou autre élément imperméable à l'air), la composition conforme à l'invention peut contenir au moins un élastomère diénique essentiellement saturé, en particulier au moins un copolymère EPDM ou un caoutchouc butyle (éventuellement chloré ou bromé), que ces copolymères soient utilisés seuls ou en mélange avec des élastomères diéniques fortement insaturés tels que cités précédemment, notamment NR ou IR, BR ou SBR.

### II-2. Charge inorganique renforçante

Par "charge inorganique renforçante", doit être entendu ici, de manière connue, toute charge inorganique ou minérale, quelles que soient sa couleur et son origine (naturelle ou de synthèse), encore appelée charge "blanche", charge "claire" ou encore charge "non-noire" ("*non-black filler*") par opposition au noir de carbone, cette charge inorganique étant capable de renforcer à elle seule, sans autre moyen qu'un agent de couplage intermédiaire, une composition de caoutchouc destinée à la fabrication d'une bande de roulement de pneumatiques, en d'autres termes apte à remplacer, dans sa fonction de renforcement, un noir de carbone conventionnel de grade pneumatique pour bande de roulement. Une telle charge se caractérise généralement par la présence de groupes fonctionnels, notamment hydroxyle (-OH), à sa surface, nécessitant en cela l'emploi d'un agent ou système de couplage destiné à assurer une liaison chimique stable entre l'élastomère isoprénique et ladite charge.

Préférentiellement, la charge inorganique renforçante est une charge du type siliceuse ou alumineuse, ou un mélange de ces deux types de charges.

La silice (SiO₂) utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. Les silices précipitées hautement dispersibles (dites "HDS") sont préférées, en particulier lorsque l'invention est mise en oeuvre pour la fabrication de pneumatiques présentant une faible résistance au roulement ; comme exemples de telles silices, on peut citer les silices Ultrasil 7000 de la société Degussa, les silices Zeosil 1165 MP, 1135 MP et 1115 MP de la société Rhodia, la silice Hi-Sil EZ150G de la société PPG, les silices Zeopol 8715, 8745 ou 8755 de la Société Huber, les silices telles que décrites dans la demande WO 03/016387.

L'alumine (Al₂O₃) renforçante utilisée préférentiellement est une alumine hautement dispersible ayant une surface BET allant de 30 à 400 m²/g, plus préférentiellement entre 60 et 250 m²/g, une taille moyenne de particules au plus égale à 500 nm, plus préférentiellement au plus égale à 200 nm. Comme exemples non limitatifs de telles alumines renforçantes, on peut citer notamment les alumines "Baikalox A125" ou "CR125" (société Baïkowski), "APA-100RDX" (Condéa), "Aluminoxid C" (Degussa) ou "AKP-G015" (Sumitomo Chemicals).

A titre d'autres exemples de charge inorganique susceptible d'être utilisée dans les compositions de caoutchouc de l'invention peuvent être encore cités des (oxyde-)hydroxydes d'aluminium, des aluminosilicates, des oxydes de titane, des carbures ou nitrures de silicium, tous du type renforçants tels que décrits par exemple dans les demandes WO 99/28376, WO 00/73372, WO 02/053634, WO 2004/003067, WO 2004/056915.

Lorsque les bandes de roulement de l'invention sont destinées à des pneumatiques à faible résistance au roulement, la charge inorganique renforçante utilisée, en particulier s'il s'agit de silice, a de préférence une surface BET comprise entre 60 et 350 m2/g. Un mode de réalisation avantageux de l'invention consiste à utiliser une charge inorganique renforçante, en particulier une silice, ayant une surface spécifique BET élevée, comprise dans un domaine de 130 à 300 m²/g, en raison du haut pouvoir renforçant reconnu de telles charges. Selon un autre mode préférentiel de réalisation de l'invention, on peut utiliser une charge inorganique renforçantes, en particulier une silice, présentant une surface spécifique BET inférieure à 130 m²/g, préférentiellement dans un tel cas comprise entre 60 et 130 m²/g (voir par exemple demandes WO03/002648 et WO03/002649).

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-dessus.

L'homme du métier saura adapter le taux de charge inorganique renforçante selon la nature de la charge inorganique utilisée et selon le type de pneumatique concerné, par exemple pneumatique pour moto, pour véhicule de tourisme ou encore pour véhicule utilitaire tel que camionnette ou Poids lourd. De préférence, ce taux de charge inorganique renforçante sera choisi compris entre 20 et 200 pce, plus préférentiellement entre 30 et 150 pce, en particulier supérieur à 40 pce (par exemple compris entre 40 et 120 pce, notamment entre 40 et 80 pce).

Dans le présent exposé, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po* : 0.05 à 0.17). La surface spécifique CTAB est la surface externe déterminée selon la norme française NF T 45-007 de novembre 1987 (méthode B).

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

### II-3. Agent de couplage organosiloxane

On rappelle tout d'abord que, selon des définitions bien connues de l'homme du métier, doit être entendu :
- par composé "organosilicié" ou "organosilicique" ("*organosilicon compound*"), un composé organique renfermant au moins une liaison carbone-silicium ;
- par groupe "silylé" un groupe porteur d'un seul (il est alors qualifié de monosilylé) ou de plusieurs (il est alors qualifié alors de polysilylé) atome(s) de silicium.
- par "organosiloxane" tout composé organique, oligomère, polymère comportant au moins un (i.e., un ou plusieurs) groupement(s) ≡Si-O-Si≡, et les mélanges de tels composés.

Comme expliqué précédemment, un agent de couplage (charge inorganique/ élastomère diénique) est, de manière connue, porteur d'au moins deux fonctions, notées ici "Y" et "X", lui permettant de pouvoir se greffer, d'une part sur la charge inorganique renforçante au moyen de la fonction "Y", d'autre part sur l'élastomère diénique au moyen de la fonction "X".

Un agent de recouvrement de la charge inorganique comporte la seule fonction "Y", par exemple un groupe hydroxyle ou un groupe hydrolysable, active vis-à-vis des sites fonctionnels (par exemple des sites hydroxyle -OH) de la charge inorganique mais est en tout cas dépourvu de la seconde fonction "X" active vis-à-vis de l'élastomère diénique.

L'agent de couplage utilisé dans les compositions de caoutchouc conformes à l'invention est un organosiloxane polyfonctionnel (c'est-à-dire au moins bifonctionnel) comportant par molécule, greffés sur ses atomes de silicium, d'une part au moins une fonction hydroxyle ou hydrolysable (radical ou fonction "Y" supra) lui permettant de se greffer sur la charge inorganique renforçante, d'autre part, et c'est là la caractéristique essentielle de cet organosiloxane pour l'application visée, au moins un groupe porteur d'au moins un groupé fonctionnel azo-dicarbonyle -CO-N=N-CO- (radical ou fonction "X") lui permettant de se greffer sur l'élastomère isoprénique.

L'homme de métier comprendra aisément que, par l'expression "organosiloxane polyfonctionnel" ci-dessus, on entend donc tout composé siloxane porteur, à titre de fonction "Y", d'au moins un motif siloxyle équipé d'un, deux ou trois groupe(s) OH ou groupe(s) monovalent(s) hydrolysable(s), et, à titre de fonction "X", d'au moins un motif siloxyle équipé d'au moins une double liaison azo activée par la présence d'un groupe carbonyle (>C=O) sur chacun des deux atomes d'azote, permettant la formation d'une liaison covalente avec l'élastomère isoprénique.

En d'autres termes, l'organosiloxane multifonctionnel utilisable dans la composition de l'invention est un organosiloxane constitué de motifs siloxyle, identiques ou différents, de formule moyenne (I) qui suit :

(I) G³_{c} G²_{b} G¹ₐ Si O_{(4-a-b-c)/2}

dans laquelle :
- a, b et c sont chacun des entiers ou fractionnaires de 0 à 3;
- les radicaux G¹, identiques ou différents s'ils sont plusieurs, représentent un radical hydrocarboné monovalent ;
- les radicaux G², identiques ou différents s'ils sont plusieurs, représentent un groupe hydroxyle ou hydrolysable (fonction "Y");
- les radicaux G³, identiques ou différents s'ils sont plusieurs, représentent un groupe (fonction "X") porteur de la fonction azodicarbonyle (-CO-N=N-CO-).
avec la réserve que :
- 0 < (a+b+c) ≤ 3 ;
- au moins un radical G² (soit b ≥ 1) et au moins un radical G³ (soit c ≥ 1) sont présents dans la molécule siloxane.

La notation simplifiée utilisée dans la formule (I) ci-dessus est bien connue de l'homme du métier dans le domaine des organosiloxanes ; elle englobe les différentes formules particulières possibles pour les motifs siloxyle, quels que soient notamment leur taux de fonctionnalisation, leur position sur la molécule ou la chaîne siloxane (par exemple le long de la chaîne ou en bout(s) de chaîne) ou la nature du siloxane (par exemple un polyorganosiloxane linéaire, branché ou cyclique, un copolymère statistique, séquencé ou à blocs).

On compendra en particulier que les radicaux G² et G³ peuvent être portés par un même atome de silicium ou par deux atomes de silicum différents.

Selon un mode de réalisation préférentiel, G³ a pour formule particulière (II) :

(II) A-CO-N=N-CO-Z-

dans laquelle:
- Z est un groupe de liaison divalent permettant de relier le groupe fonctionnel azo-dicarbonyle à un atome de silicium de l'organosiloxane ;
- A représente un radical hydrocarboné monovalent ou le groupement de formule Z' dans laquelle Z', identique à ou différent de Z, est un groupe de liaison divalent permettant de relier le groupe fonctionnel azo-dicarbonyle à un atome de silicium (identique ou différent de l'atome de Si relié à Z) de l'organosiloxane ;
- A, Z et le cas échéant Z' pouvant comporter, indépendamment, un ou plusieurs hétéroatomes.

En d'autres termes, l'organosiloxane est constitué de motifs siloxyle, identiques ou différents, de formule moyenne (III) :

(III) (A-CO-N=N-CO-Z)_{c} G²_{b} G¹ₐ Si O_{(4-a-b-c)/2}

dans lequelle A et Z ont les définitions données ci-dessus pour la formule (II).

Dans cette formule (III), on doit bien entendu comprendre que le radical G³ (A-CO-N=N-CO-Z) est relié à un atome de Si par l'intermédiaire du radical divalent -Z-.

Selon un mode de réalisation particulièrement préférentiel l'organosiloxane est porteur d'un seul radical G³, c'est-à-dire que c = 1.

En d'autres termes, l'organosiloxane préférentiel ci-dessus est constitué de motifs siloxyle, identiques ou différents, de formules moyennes équivalentes (IV) ou (V) :

(IV) G³ G²_{b} G¹ₐ Si O_{(3-a-b)/2}

(V) G²_{b} G¹ₐ (A-CO-N=N-CO-Z) Si O_{(3-a-b)/2}

dans lesquelles:
- les radicaux G¹, G² et G³ ont les définitions données supra ;
- a est un entier ou fractionnaire de 0 à 2;
- b est un entier ou fractionnaire de 1 à 2;
- avec la réserve que (a+b) ≤ 2.

Cet organosiloxane de formule (IV) ou (V) peut être représenté également, conformément à une autre représentation symbolique bien connue de l'homme du métier pour les composés organosiloxane, respectivement selon les formules (VI) ou (VII) équivalentes :

(VI) [(G⁰)₃SiO_{1/2})ₘ [(G⁰)₂SiO_{2/2}]ₙ [G⁰SiO_{3/2}]ₒ [SiO_{4/2}]ₚ [G³(G²)_{b}(G¹)ₐ SiO_{(3-a'-b')/2}]_{q}

(VII) [(G⁰)₃SiO_{1/2}]ₘ [(G⁰)₂SiO_{2/2}]ₙ [G⁰SiO_{3/2}]ₒ [SiO_{4/2}]ₚ [(G²)_{b'}(G¹)_{a'}(A-CO-N=N-CO-Z)SiO_{(3-a'-b')/2}]_{q}

dans lesquelles :
- a' représente un nombre entier choisi parmi 0, 1 et 2 ;
- b' représente un nombre entier choisi parmi 0, 1 et 2 ;
- la somme a'+b' se situe dans l'intervalle allant de 0 à 2 avec la condition selon laquelle quand b' = 0, alors au moins un des symboles G⁰ répond à la définition de G² ;
   o soit au moins un des m, n, o, p est un nombre entier ou fractionnaire différent de 0 (zéro) et q représente un nombre entier ou fractionnaire égal ou supérieur à 1 ;
   o soit q est supérieur à 1 et alors chacun des m, n, o, p a une valeur quelconque ;
- les symboles G⁰, identiques ou différents, représentent chacun l'un des groupes correspondant à G² ou G¹ ;
- A, Z, G¹, G² et G³ ont les définitions données supra pour la formule générale (I) ou pour les formules particulières (II) à (V).

L'organosiloxane est de préférence un oligomère siloxane comportant de 2 à 20, plus préférentiellement de 2 à 12 (par exemple de 2 à 6) atomes de silicium (nombre correspondant à la somme m+n+o+p+q de la formule VII).

De tels oligomères siloxanes préférentiels sont par exemple ceux dans la formule (VII) desquels:
- a + b = 1 ou 2 ;
- m se situe dans l'intervalle allant de 1 à 2 ;
- n = p = o = 0 (zéro) ; et
- q = 1 ,
ces oligomères siloxane pouvant être éventuellement, selon leurs conditions de synthèse spécifiques, associés à un (ou plusieurs) organosilane(s) fonctionnalisé(s) azo (porteurs d'un radical G³) correspondant en fait à la formule (VII) supra dans laquelle : a + b = 3 ; m = n = o = p = 0 (zéro) ; et q = 1.

Le groupe divalent Z est choisi de préférence parmi les groupes hydrocarbonés aliphatiques, saturés ou insaturés, les groupes carbocycliques, saturés, insaturés ou/et aromatiques, monocycliques ou polycycliques, et les groupes présentant une partie hydrocarbonée aliphatique, saturée ou insaturée et une partie carbocyclique telle que définie ci-dessus. Ce groupe Z comporte de préférence de 1 à 18 atomes de carbone, il représente plus préférentiellement une chaîne alkylène, un groupe cycloalkylène saturé, un groupe arylène, ou un groupe divalent constitué d'une combinaison d'au moins deux de ces groupes.

Le groupe hydrocarboné monovalent pouvant être représenté par A peut être aliphatique, linéaire ou ramifié, ou carbocyclique, notamment aromatique ; il peut être substitué ou non substitué, saturé ou insaturé.

Dans la présente description, on entend par groupe hydrocarboné aliphatique, un groupe linéaire ou ramifié, de préférence comprenant de 1 à 18 atomes de carbone, éventuellement substitué. Avantageusement, ledit groupe hydrocarboné aliphatique comprend de 1 à 12 atomes de carbone, mieux de 1 à 8 atomes de carbone, plus préférentiellement encore de 1 à 6 atomes de carbone.

A titre de groupe hydrocarboné aliphatique saturé, on peut citer les groupes alkyle tels que méthyle, éthyle, propyle, isopropyle, n-butyle, isobutyle, t-butyle, pentyle, isopentyle, néopentyle, 2-méthylbutyle, 1-éthylpropyle, hexyle, isohexyle, néohexyle, 1-méthylpentyle, 3-méthylpentyle, 1,1-diméthylbutyle, 1,3-diméthylbutyle, 2-éthylbutyle, 1-méthyl-1-éthylpropyle, heptyle, 1-méthylhexyle, 1-propylbutyle, 4,4-diméthylpentyle, octyle, 1-méthylheptyle, 2-éthylhexyle, 5,5-diméthylhexyle, nonyle, décyle, 1-méthylnonyle, 3,7-diméthyloctyle, 7,7-diméthyloctyle et hecadécyle.

Les groupes hydrocarbonés aliphatiques insaturés utilisables comprennent une ou plusieurs insaturations, de préférence une, deux ou trois insaturations de type éthylénique (double liaison) ou/et acétylénique (triple liaison). Des exemples en sont les groupes alcényle ou alcynyle dérivant des groupes alkyle définis ci-dessus par élimination de deux atomes d'hydrogène, ou plus. De manière préférée, les groupes hydrocarbonés aliphatiques insaturés comprennent une seule insaturation.

Par radical carbocyclique, est entendu un radical monocyclique ou polycyclique, éventuellement substitué, de préférence en C₃-C₅₀. De façon avantageuse, il s'agit d'un radical en C₃-C₁₈ de préférence mono-, bi- ou tricyclique. Lorsque le radical carbocyclique comprend plus d'un noyau cyclique (cas des carbocycles polycycliques), les noyaux cycliques sont condensés deux à deux. Deux noyaux condensés peuvent être orthocondensés ou péricondensés. Le radical carbocyclique peut comprendre, sauf indications contraires, une partie saturée et/ou une partie aromatique et/ou une partie insaturée.

Des exemples de radicaux carbocycliques saturés sont les groupes cycloalkyle. De manière préférée, les groupes cycloalkyle sont en C₃-C₁₈, mieux encore en C₅-C₁₀. On peut citer notamment les radicaux cyclopentyle, cyclohexyle, cycloheptyle, cyclooctyle, adamantyle ou norbornyle.

Le carbocycle insaturé ou toute partie insaturée de type carbocyclique présente une ou plusieurs insaturation éthyléniques, de préférence une, deux ou trois. Il comporte avantageusement de 6 à 50 atomes de carbone, mieux encore de 6 à 20, par exemple de 6 à 18 atomes de carbone.

Des exemples de carbocycles insaturés sont les groupes cycloalcényles en C₆-C₁₀. Des exemples de radicaux carbocycliques aromatiques sont les groupes aryle en C₆-C₁₈ et notamment phényle, naphtyle, anthryle et phénanthryle.

Un groupe présentant. à la fois une partie aliphatique hydrocarbonée et une partie carbocyclique telles que définies ci-dessus est, par exemple, un groupe arylalkyle tel que benzyle, ou un groupe alkylaryle tel que tolyle.

Les substituants des groupes ou parties aliphatiques hydrocarbonés et des groupes ou parties carbocycliques sont, par exemple, des groupes alkoxyle dans lesquels la partie alkyle est préférentiellement telle que définie ci-dessus.

Z' peut être identique à Z ou différent de ce dernier, il permet de relier le groupe fonctionnel azo-dicarbonyle à un atome de Si de l'organosiloxane, ce dernier pouvant être identique ou différent de l'atome de Si relié à Z. Z' a la même définition et les mêmes caractéristiques préférentielles que celles décrites ci-dessus pour Z.

Selon un mode de réalisation particulièrement préférentiel, au moins l'un des groupes A, Z et le cas échéant Z' comporte un (au moins un) hétéroatome choisi préférentiellement parmi O, S et N. Cet hétérotaome est de préférence relié directement à la liaison carbonyle adjacente.

Lorsqu'un tel hétéroatome est porté par le radical hydrocarboné monovalent A, il l'est de préférence sous la forme d'un reste hydrocarboné monovalent choisi parmi -OR, -NR et -SR (R radical hydrocarboné monovalent quelconque comportant de préférence de 1 à 18 atomes de carbone) dont la valence libre est, plus préférentiellement, reliée directement à la liaison carbonyle adjacente ; le reste -OR est préféré, avec R représentant un alkyle en C₁-C₆, de préférence en C₁-C₄ (méthyle, éthyle, propyle, butyle), plus préférentiellement C₁ (méthyle) ou C₂ (éthyle).

Lorsqu'un tel hétéroatome est porté par Z et/ou le cas échéant Z' (soit par Z seulement, par Z' seulement, ou par les deux), il l'est de préférence sous la forme d'un reste hydrocarboné divalent choisi parmi les restes -R'-NH- ; -R'-O- ; et -R'-S (R' radical hydrocarboné divalent quelconque comportant de préférence de 1 à 18 atomes de carbone) ; le reste -R'-NH- est préféré, avec R' représentant un alkylène en C₁-C₆, de préférence en C₁-C₄ (méthylène, éthylène, propylène, butylène), plus préférentiellement C₃ (propylène).

Selon un mode de réalisation particulièrement préféré, on a dans les formules (I) à (VII) ci-dessus au moins une, plus préférentiellement l'ensemble, des caractéristiques suivantes qui est vérifié(e) :
- les radicaux G¹, identiques ou différents entre eux, sont choisis dans le groupe constitué par les groupes alkyle en C₁-C₆, cyclohexyle ou phényle ;
- les radicaux G², identiques ou différents entre eux, sont choisis dans le groupe constitué par les groupes hydroxyle, alkoxyles en C₁-C₈ et cycloalkoxyles en C₅-C₈.

Selon un mode de réalisation plus particulièrement préféré, on a dans les formules (I) à (VII) ci-dessus au moins une, plus préférentiellement l'ensemble des caractéristiques suivantes qui est vérifié(e) :
- les radicaux G¹ sont choisis parmi les alkyles en C₁-C₄, plus particulièrement parmi méthyle et éthyle ;
- les radicaux G² sont choisis parmi hydroxyle et alkoxyles en C₁-C₄, plus particulièrement parmi hydroxyle, méthoxyle et éthoxyle.

G¹ et G² pourraient aussi former ensemble et avec l'atome de silicium qui les porte un groupe carbocyclique monocyclique ou polycyclique ayant de 2 à 10 atomes de carbone cyclique et pouvant comporter un ou plusieurs hétéroatome(s) cyclique(s) oxygéné(s). A titre d'exemple, on citera par exemple les cycles :

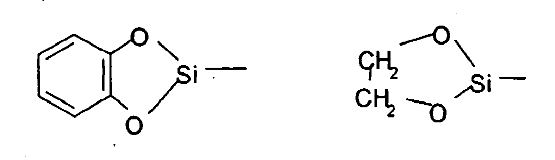

Des azosiloxanes de formule (V) dans la structure desquels le symbole A comporte un atome d'oxygène à titre d'hétéroatome, et répondant aux caractéristiques préférentielles énoncées précédemment, sont notamment ceux constitués de motifs siloxyle, identiques ou différents, de formule moyenne (VIII) qui suit :

(VIII) G²_{b} G¹ₐ (R-O-CO-N=N-CO-Z) Si O_{(3-a-b)/2}

dans laquelle :
- a, b, Z, G¹ et G² ont les définitions données supra ;
- R représente un alkyle en C₁-C₆, de préférence en C₁-C₄ (notamment méthyle ou éthyle).

Des azosiloxanes de formule (V) dans la structure desquels A = Z' et répondant aux caractéristiques préférentielles énoncées précédemment, sont notamment ceux constitués de motifs siloxyle, identiques ou différents, de formule moyenne (IX) :

(IX) G²_{b} G¹ₐ (Z'-CO-N=N-CO-Z) Si O_{(3-a-b)/2}

dans laquelle :
- a, b, Z, Z', G¹ et G² ont les définitions données supra.

Dans les formules précédentes, en particulier (VIII) et (IX), on a de préférence les caractéristiques suivantes qui sont vérifiées :
- G¹ est le radical méthyle ou éthyle ;
- G² est le radical hydroxyle, méthoxyle ou éthoxyle ;
- Z (et le cas échéant Z') représente un radical hydrocarboné divalent comportant de 1 à 18 atomes de carbone, de préférence un alkylène en C₁-C₁₀.

Dans ces formules précédentes, en particulier (VIII) et (IX), on a plus préférentiellement les caractéristiques suivantes qui sont vérifiées :
- G¹ est le radical méthyle ;
- G² est le radical hydroxyle ou éthoxyle ;
- Z (et le cas échéant Z') est un alkylène en C₁-C₁₀ comportant un hétéroatome choisi de préférence parmi O, S et N.

Dans ces formules précédentes, plus préférentiellement encore, Z (et le cas échéant Z') est un radical divalent choisi dans le groupe constitué par -(CH₂)_{y}- ; -NH-(CH₂)_{y} ; -O-(CH₇)_{y}- ; y étant un entier de 1 à 6, notamment de 1 à 4, en particulier égal à 3.

Les agents de couplage organosiloxane précédemment décrits peuvent être préparés par exemple selon un procédé de synthèse consistant à oxyder le groupe hydrazo d'un réactif précurseur de formule (X):

(X) (G²)_{b}(G¹)ₐ Si-Z-CO-NH-NH-CO-A

à l'aide d'un système oxydant comprenant au moins un oxydant (par exemple un halogène comme le brome) et au moins une base (par exemple une base minérale comme Na₂CO₃), en faisant intervenir un réactif supplémentaire choisi parmi mono- et polyalkoxysilanes (à titre d'exemple le triméthyléthoxysilane), et en opérant de préférence au sein d'un milieu liquide organique (par exemple en utilisant un solvant comme le dichlorométhane).

Un mode opératoire avantageux pour conduire ce procédé consiste à charger dans le réacteur à température ambiante (23°C) : le réactif précurseur (X) ci-dessus, la base (sa quantité dépendant de l'agent oxydant mis en oeuvre ; par exemple, dans le cas du brome, on utilise deux équivalents molaires de base par rapport au brome), le solvant organique et le réactif supplémentaire (sa quantité correspondant par exemple à au moins un équivalent molaire par rapport au précurseur), puis à additionner progressivement dans le milieu réactionnel le système oxydant (sa quantité molaire étant par exemple stoechiométrique par rapport à celle du précurseur).

S'agissant du réactif précurseur (X), il peut être préparé en faisant tout d'abord réagir un silane précurseur de formule (G²)_{b}(G¹)ₐ Si-P¹ avec un dérivé hydrazo précurseur de formule P²-NH-NH-CO-A, formules dans lesquelles les symboles G¹, G² et A sont tels que définis ci-avant, a+b = 3 et P¹ et P² représentent des groupes dont la structure et la fonctionnalité de chacun sont telles que ces groupes sont capables de réagir l'un avec l'autre pour donner naissance à l'enchaînement central -Z-CO- de manière à conduire au composé hydrazo de formule (X).

Dans le cas par exemple de la préparation de ce composé hydrazo de formule (X) dans la structure duquel le symbole Z représente alors le radical divalent -NH-(CH₂)_{y}- (y entier de 1 à 6, de préférence 1 à 4, plus préférentiellement égal à 3), le schéma de synthèse appliqué est par exemple le suivant :
- on fait réagir un silane précurseur de formule (G²)ₐ(G¹)₃₋ₐ Si-(CH₂)_{y}-NCO ;
- avec un dérivé hydrazo précurseur de formule H₂N-NH-CO-A ;
- pour obtenir le composé hydrazo final de formule (X).

En ce qui concerne la manière pratique de mettre en oeuvre le procédé qui vient d'être décrit pour l'obtention du composé hydrazo (X), on pourra se reporter par exemple au document de brevet FR-A-2 340 323 (ou US-A-4,118,367).

A titre d'exemple d'un composé azosiloxane de formule générique (VII) dans lequel :
- a' = 0 (zéro) ;
- b' = 2 ;
- q = 1 ;
- m = 1 ;
- n = p = o = 0 (zéro),
peut être cité par exemple le composé de formule (XI) (Me = méthyle, Et = éthyle):

(XI) [Me₃SiO_{1/2}] [(EtO)₂ (A-CO-N=N-CO-Z)SiO_{1/2}]

notamment le composé de formule particulière (XI-1) dans la structure duquel le symbole A représente le radical monovalent Et-O- et le symbole Z représente le radical divalent -NH-(CH₂)₃- :

(XI-1) [Me₃SiO_{1/2}] [(EtO)₂ (Et-O-CO-N=N-CO-NH-(CH₂)₃)SiO_{1/2}]

On rappelle que la représentation des formules (XI) et (XI-1) ci-dessus signifie, de manière bien connue de l'homme du métier, qu'il existe donc un premier atome de Si porteur à la fois de la fonction "X" (azo activée) et de deux fonctions "Y" (éthoxy), cet atome de Si partageant (sur sa 4^{ème} valence) un atome d'oxygène avec un second atome de Si porteur simplement de trois groupes méthyle.

Un tel composé de formule (XI-1) peut donc être représenté sous la forme développée qui suit :

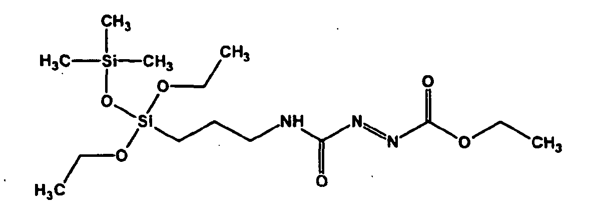

A titre d'un autre exemple d'un composé azosiloxane de formule générique (VII) dans lequel :
- a' = 1 ;
- b' = 1 ;
- q = 1 ;
- m=2;
- n = p = o = 0 (zéro),
peut être cité par exemple le composé de formule (XII) (Me = méthyle, Et = éthyle):

(XII) [Me3SiO_{1/2}]₂ [(EtO) (A-CO-N=N-CO-Z)SiO_{2/2}]

notamment le composé de formule particulière (XII-1) dans la structure duquel le symbole A représente le radical monovalent Et-O- et le symbole Z représente le radical divalent -NH-(CH₂)₃- :

(XII-1) [Me₃SiO_{1/2}]₂ [(EtO) (Et-O-CO-N=N-CO-NH-(CH2)3)SiO_{2/2}]

La représentation ci-dessus des formules (XII) et (XII-1) signifie de manière connue qu'il existe un atome de Si central porteur de la fonction "X" (azo activée) et de la fonction "Y" (éthoxy) sur deux de ses valences, partageant un atome d'oxygène avec deux atomes de Si adjacents porteurs simplement de trois groupes méthyle chacun.

Un tel composé de formule (XII-1) peut donc être représenté sous la forme développée qui suit :

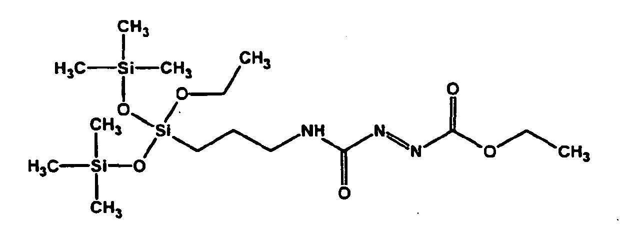

Dans les compositions de caoutchouc conformes à l'invention, la teneur globale en système de couplage est préférentiellement comprise entre 2 et 15 pce, plus préférentiellement entre 2 et 12 pce (par exemple entre 4 et 8 pce). Mais il est en général souhaitable d'en utiliser le moins possible. Par rapport au poids de charge inorganique non-noire renforçante, le taux de système de couplage représente typiquement entre 0,5 et 15% en poids par rapport à la quantité de charge inorganique ; de préférence, il est inférieur à 12%, plus préférentiellement inférieur à 10% en poids par rapport à cette quantité de charge.

Tout ou partie du système de couplage selon l'invention pourrait être préalablement greffé (via les fonctions "X") sur l'élastomère isoprénique de la composition de l'invention, l'élastomère ainsi fonctionnalisé ou "précouplé" comportant alors les fonctions "Y" libres pour la charge inorganique renforçante. Tout ou partie de ce système de couplage pourrait également être préalablement greffé (via les fonctions "Y") sur la charge inorganique renforçante, la charge ainsi "précouplée" pouvant ensuite être liée à l'élastomère diénique par l'intermédiaire des fonctions libres "X". On préfère toutefois, notamment pour des raisons de meilleure mise en oeuvre des compositions de caoutchouc à l'état cru, utiliser tout ou partie de l'agent de couplage soit greffé sur la charge, soit à l'état libre (i.e., non greffé).

### II-4. Additifs divers

Les compositions de caoutchouc conformes à l'invention comportent également tout ou partie des additifs usuels habituellement utilisés dans les compositions d'élastomères destinées à la fabrication de pneumatiques ou produits-semi-finis pour pneumatique, comme par exemple des plastifiants ou des huiles d'extension, que ces derniers soient de nature aromatique ou non-aromatique, des pigments, des agents de protection tels que cires anti-ozone, anti-ozonants chimiques, des agents anti-oxydants qu'il est préférable de conserver présents dans la masse, des agents anti-fatigue, des résines renforçantes ou plastifiantes, des bismaléimides, des accepteurs (par exemple résine phénolique novolaque) ou des donneurs de méthylène (par exemple HMT ou H3M) tels que décrits par exemple dans la demande WO 02/10269 précitée, un système de réticulation à base soit de soufre, soit de donneurs de soufre et/ou de peroxyde et/ou de bismaléimides, des accélérateurs et/ou activateurs de vulcanisation, des agents antiréversion tels que par exemple l'hexathiosulfonate de sodium ou le N,N'-m-phénylène-biscitraconimide. L'homme du métier saura ajuster la formulation de la composition en fonction de ses besoins particuliers.

De préférence, ces compositions comportent, à titre d'agent plastifiant préférentiel non aromatique ou très faiblement aromatique, au moins un composé choisi dans le groupe constitué par les huiles naphténiques, paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés. Le taux global d'un tel agent plastifiant préférentiel est de préférence compris entre 15 et 45 pce, plus préférentiellement entre 20 et 40 pce.

A la charge renforçante précédemment décrite, c'est-à-dire la charge renforçante non-noire (en particulier inorganique) plus noir de carbone le cas échéant, peuvent être également ajoutés, en fonction de l'application visée, des charges inertes (i.e., non renforçantes) telles que particules d'argile, bentonite, talc, craie, kaolin, utilisables par exemple dans des flancs ou des bandes de roulement de pneumatique colorés.

Ces compositions peuvent également contenir, en complément des agents de couplage, des activateurs de couplage, des agents de recouvrement (comportant par exemple la seule fonction "Y") de la charge renforçante non-noire ou plus généralement des agents d'aide à la mise en oeuvre susceptibles de manière connue, grâce à une amélioration de la dispersion de la charge non-noire dans la matrice de caoutchouc et à un abaissement de la viscosité des compositions, d'améliorer leur faculté de mise en oeuvre à l'état cru, ces agents étant par exemple des silanes hydroxylés ou hydrolysables tels que des hydroxysilanes, des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des polyorganosiloxanes hydroxylés ou hydrolysables, par exemple des par exemple des α,ω-dihydroxy-polyorganosiloxanes (notamment des α,ω-dihydroxy-polydiméthylsiloxanes), et les mélanges de tels composés.

### II-5. Préparation des compositions de caoutchouc

Les compositions sont fabriquées dans des mélangeurs appropriés, en utilisant deux phases de préparation successives bien connues de l'homme du métier : une première phase de travail ou malaxage thermo-mécanique (parfois qualifiée de phase "non-productive") à haute température, jusqu'à une température maximale (notée Tₘₐₓ) comprise entre 110°C et 190°C, de préférence entre 130°C et 180°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Le procédé de fabrication selon l'invention est caractérisé en ce qu'au moins la charge inorganique renforçante et tout ou partie de l'agent de couplage sont incorporés par malaxage à l'élastomère diénique, au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre une température maximale comprise entre 110°C et 190°C, de préférence comprise entre 130°C et 180°C.

A titre d'exemple, la première phase (non-productive) est conduite en une seule étape thermomécanique au cours de laquelle on introduit, dans un mélangeur approprié tel qu'un mélangeur interne usuel, dans un premier temps tous les constituants de base nécessaires (élastomère diénique, charge inorganique renforçante et tout ou partie de l'agent de couplage), puis dans un deuxième temps, par exemple après une à deux minutes de malaxage, les éventuels agents de recouvrement ou de mise en oeuvre complémentaires et autres additifs divers à l'exception du système de vulcanisation. La durée totale du malaxage, dans cette phase non-productive, est de préférence comprise entre 2 et 10 min. Après refroidissement du mélange ainsi obtenu, on incorpore alors, le cas échéant la seconde partie de l'agent de couplage, puis le système de vulcanisation à basse température, généralement dans un mélangeur externe tel qu'un mélangeur à cylindres ; le tout est alors mélangé (phase productive) pendant quelques minutes, par exemple entre 5 et 15 min.

Selon différentes variantes de réalisation possibles, l'agent de couplage organosiloxane peut être introduit en totalité pendant la phase non-productive, en même temps que la charge inorganique, ou alors sous forme fractionnée (par exemple à raison de 75/25, 50/50 ou 25/75 parties respectives en poids) sur les deux phases, respectivement non-productive (i.e., dans le mélangeur interne) puis productive (par exemple dans le mélangeur externe).

Il convient de noter qu'il est possible d'introduire tout ou partie de l'organosiloxane sous une forme supportée (la mise sur support étant réalisée au préalable) sur un solide compatible avec les structures chimiques correspondant à ce composé ; un tel support est notamment du noir de carbone. Par exemple, lors du fractionnement entre les deux phases successives ci-dessus, il peut être avantageux d'introduire la seconde partie dr l'organosiloxane, sur le mélangeur externe, après une mise sur support afin de faciliter son incorporation et sa dispersion.

La composition finale ainsi obtenue est ensuite calandrée, par exemple sous la forme d'une feuille, d'une plaque ou encore extrudée, par exemple pour former un profilé de caoutchouc utilisé pour la fabrication de semi-finis tels que des bandes de roulement, des nappes d'armatures de sommet, des flancs, des nappes d'armatures de carcasse, des talons, des protecteurs, des chambres à air ou des gommes intérieures étanches pour pneu sans chambre.

La vulcanisation (ou cuisson) est conduite de manière connue à une température généralement comprise entre 130°C et 200°C, de préférence sous pression, pendant un temps suffisant qui peut varier par exemple entre 5 et 90 min en fonction notamment de la température de cuisson, du système de vulcanisation adopté et de la cinétique de vulcanisation de la composition considérée.

Le système de vulcanisation proprement dit est préférentiellement à base de soufre et d'un accélérateur primaire de vulcanisation, en particulier un accélérateur du type sulfénamide. A ce système de réticulation viennent s'ajouter, incorporés au cours de la première phase non-productive et/ou au cours de la phase productive, divers accélérateurs secondaires ou activateurs de vulcanisation connus tels que oxyde de zinc, acide stéarique, dérivés guanidiques (en particulier diphénylguanidine), d'éventuels agents anti-réversion, etc. Le soufre est utilisé à un taux préférentiel compris entre 0,5 et 10 pce, plus préférentiellement compris entre 0,5 et 5,0 pce, par exemple entre 0,5 et 3,0 pce lorsque l'invention est appliquée à une bande de roulement de pneumatique. L'accélérateur primaire de vulcanisation est utilisé à un taux préférentiel compris entre 0,5 et 10 pce, plus préférentiellement compris entre 0,5 et 5,0 pce en particulier lorsque l'invention s'applique à une bande de roulement de pneumatique.

L'invention concerne les compositions de caoutchouc précédemment décrites tant à l'état dit "cru" (i.e., avant cuisson) qu'à l'état dit "cuit" ou vulcanisé (i.e., après réticulation ou vulcanisation). Les compositions conformes à l'invention peuvent être utilisées seules ou en coupage (i.e., en mélange) avec toute autre composition de caoutchouc utilisable pour la fabrication de pneumatiques.

### III. EXEMPLES DE REALISATION DE L'INVENTION

### III-1. Synthèse de l'agent de couplage azosiloxane

Cet exemple illustre la préparation des organosiloxanes de formule (XI) et (XII) qui conviennent particulièrement bien, dans la structure desquels le symbole A représente le radical monovalent Et-O- et le symbole Z représente le radical divalent -NH-(CH₂)₃-, le schéma de synthèse appliqué étant par exemple le suivant.

Dans un réacteur de 250 mL, sont introduits 10 g (28,4 mmol, 1 éq) du composé **1** suivant (Et = éthyle) : 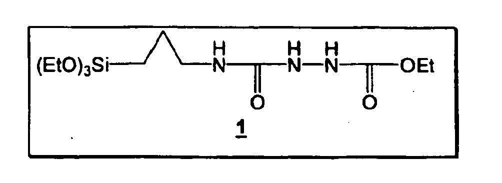 puis 7,53 g (71 mmol, soit 2,5 éq) de Na₂CO₃ sec et 50 mL d'un mélange 50/50 (vol/vol) de triméthyléthoxysilane et de dichlorométhane. Une solution de 4,55 g de brome (28,4 mmol, soit 1 éq) dans 15 mL de dichlorométhane est ajoutée goutte à goutte en 1 heure. Le mélange réactionnel est agité 30 min supplémentaires après la fin de l'addition du brome.

Le mélange réactionnel est ensuite filtré puis concentré sous vide. 9,77 g d'un liquide orange vif fluide sont obtenus. L'analyse par RMN ¹H montre que le composé 1 a été entièrement consommé, que la groupement azo a été formée sélectivement et que la perte en SiOEt est limitée.

Le produit final obtenu est un mélange des deux espèces siloxane de formule (XI-1) et (XII-1):

(XI-1) [Me₃SiO_{1/2}] [(EtO)₂ (Et-O-CO-N=N-CO-NH-(CH₂)₃)SiO_{1/2}]

(XII-1) [Me₃SiO_{1/2}]₂ [(EtO) (Et-O-CO-N=N-CO-NH-(CH₂)₃)SiO_{2/2}]

dont les formules développées ont été données supra, auxquels s'ajoute un silane de formule C₂H₅-O-CO-N=N-CO-NH-(CH₂)₃-Si(OC₂H₅)₃.

### III-2. Préparation des compositions de caoutchouc

On procède pour les essais qui suivent de la manière suivante: on introduit dans un mélangeur interne, rempli à 70% et dont la température initiale de cuve est d'environ 80°C, le caoutchouc naturel, la charge renforçante, une partie (environ 1/3) de l'agent de couplage, puis, après une à deux minutes de malaxage, les divers autres ingrédients à l'exception du système de vulcanisation. On conduit alors un travail thermomécanique (phase non-productive) en une étape (durée totale du malaxage égale à environ 4 min), jusqu'à atteindre une température maximale de "tombée" d'environ 160°C. On récupère le mélange ainsi obtenu, on le refroidit puis on ajoute le reste de l'agent de couplage, puis le système de vulcanisation (soufre et accélérateur sulfénamide) sur un mélangeur externe (homo-finisseur), en mélangeant le tout (phase productive) pendant environ 5-10 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.

### III-3. Caractérisation des compositions de caoutchouc

Cet essai a pour but de démontrer les performances de couplage améliorées apportées par l'agent de couplage siloxane précédemment synthétisé (paragraphe III-1), comparée à un agent de couplage conventionnel du type alkoxysilane (TESPT).

On prépare pour cela deux compositions à base de caoutchouc naturel renforcées d'une silice HDS, ces deux compositions différant uniquement par la nature des agents de couplage utilisés :
- composition C-1 : agent de couplage silane conventionnel ;
- composition C-2 : agent de couplage azosiloxane.

On a utilisé, pour ces deux compositions, le même nombre de moles de fonctions "Y", c'est-à-dire de groupes silylés porteurs d'au moins une fonction -OEt réactive vis-à-vis de la silice et de ses groupes hydroxyle de surface.

L'agent de couplage conventionnel de la composition témoin C-1 est le TESPT. On rappelle que le TESPT est le tétrasulfure de bis(3-triéthoxysilylpropyl), commercialisé notamment par la société Degussa sous la dénomination "Si69", de formule (Et = éthyle):

(EtO)₃Si-(CH₂)₃-S₄-(CH₂)₃-Si-(OEt)₃

ou sous forme développée :

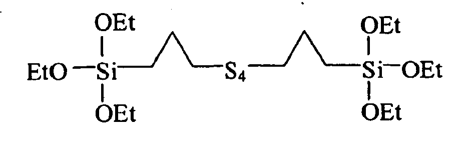

Les tableaux 1 et 2 donnent la formulation des différentes compositions (tableau 1 - taux des différents produits exprimés en pce - parties en poids pour cent parties d'élastomère) ainsi que leurs propriétés rhéométriques, et propriétés après cuisson (environ 20 min à 150°C) ; le système de vulcanisation est constitué par soufre et sulfénamide.

L'examen des différents résultats du tableau 2 montre tout d'abord, pour la composition conforme à l'invention C-2, comparée à la composition témoin C-1, une cinétique de vulcanisation nettement plus rapide, illustrée par une constante K de vitesse de conversion qui est nettement supérieure (multipliée par environ 1,8), ainsi que par un temps de cuisson (T₉₉-Ti) nettement réduit (divisé par 1,8).

Après cuisson, la composition conforme à l'invention présente des propriétés à la rupture sensiblement équivalentes, mais les valeurs les plus élevées de module sous forte déformation (M100 et M300) et de rapport M300/M100, indicateur clair pour l'homme du métier d'un meilleur renforcement apporté par la charge inorganique et l'agent de couplage siloxane.

Enfin et surtout, la composition de l'invention révèle une hystérèse nettement améliorée, comme démontré par des valeurs de tan(δ)ₘₐₓ et ΔG* sensiblement diminuées, ce qui est l'indicateur reconnu d'une réduction de la résistance au roulement des pneumatiques et par voie de conséquence de la consommation d'énergie des véhicules automobiles équipés de tels pneumatiques.

L'invention trouve des applications particulièrement avantageuses dans les compositions de caoutchouc destinées à la fabrication de bandes de roulement de pneumatiques à base d'élastomère isoprénique, en particulier lorsque ces bandes de roulement sont destinées à des pneumatiques pour véhicules industriels du type Poids-lourd.

**Tableau 1**

| Composition N°: | C-1 | C-2 |
|---|---|---|
| NR (1) | 100 | 100 |
| silice (2) | 50 | 50 |
| noir de carbone (3) | 4 | 4 |
| agent de couplage (4) | 4 | - |
| agent de couplage (5) | - | 5.5 |
| ZnO | 3 | 3 |
| anti-oxydant (6) | 1.9 | 1.9 |
| acide stéarique | 2.5 | 2.5 |
| soufre | 1.5 | 1.5 |
| accélérateur (7) | 1.8 | 1.8 |

| | | |
|---|---|---|
| (1) NR caoutchouc naturel peptisé ; (2) silice "Zeosil 1165 MP" de la société Rhodia sous forme de microperles (BET et CTAB : environ 150-160 m²/g) ; (3) noir de carbone N330 (société Degussa) ; (4) TESPT ("Si69" société Degussa) ; (5) azosiloxane (synthèse du paragraphe III-1) ; (6) N-1,3-diméthylbutyl-N-phényl-para-phénylènediamine ("Santoflex 6-PPD" de la société Flexsys) ; (7) N-cyclohexyl-2-benzothiazyl-sulfénamide ("Santocure CBS" de la société Flexsys). | | |

**Tableau 2**

| Composition N° : | C-1 | C-2 |
|---|---|---|
| *Propriétés avant cuisson:* | | |
| Ti (min) | 7.9 | 10.6 |
| T₉₉ - Ti (min) | 17.6 | 9.9 |
| K (min⁻¹) | 0.261 | 0.467 |

| *Propriétés après cuisson:* | | |
|---|---|---|
| M10 (MPa) | 5.11 | 5.41 |
| M100 (MPa) | 1.84 | 2.49 |
| M300 (MPa) | 1.81 | 3.73 |
| M300/M100 | 0.99 | 1.50 |
| tan(δ)ₘₐₓ | 0.147 | 0.105 |
| ΔG* | 1.97 | 1.29 |
| contrainte rupture (MPa) | 20 | 19 |
| allongement rupture (%) | 720 | 530 |

## Revendications

1. Composition de caoutchouc destinée à la fabrication de pneumatiques ou de produits semi-finis pour pneumatique, à base d'au moins un élastomère isoprénique, une charge inorganique à titre de charge renforçante, un agent de couplage organosiloxane polyfonctionnel assurant la liaison entre ladite charge inorganique renforçante et l'élastomère isoprénique, **caractérisée en ce que** ledit organosiloxane comporte par molécule, greffés sur ses atomes de silicium, d'une part au moins une fonction hydroxyle ou hydrolysable lui permettant de se greffer sur la charge inorganique renforçante, d'autre part, au moins un groupe porteur d'au moins un groupe fonctionnel azo-dicarbonyle -CO-N=N-CO- lui permettant de se greffer sur l'élastomère isoprénique.

2. Composition selon la revendication 1, l'organosiloxane étant constitué de motifs siloxyle, identiques ou différents, de formule moyenne :
(I) G³_{c} G²_{b} G¹ₐ Si O_{(4-a-b-c)/2}
dans laquelle :
- a, b et c sont chacun des entiers ou fractionnaires de 0 à 3 ;
- les radicaux G¹, identiques ou différents s'ils sont plusieurs, représentent un radical hydrocarboné monovalent ;
- les radicaux G², identiques ou différents s'ils sont plusieurs, représentent un groupe hydroxyle ou hydrolysable ;
- les radicaux G³, identiques ou différents s'ils sont plusieurs, représentent un groupe porteur de la fonction azodicarbonyle (-CO-N=N-CO-),
avec la réserve que :
- 0 < (a+b+c) ≤ 3 ;
- au moins un radical G² (soit b ≥ 1) et au moins un radical G³ (soit c ≥ 1) sont présents dans la molécule siloxane.

3. Composition selon la revendication 2, l'organosiloxane étant constitué de motifs siloxyle, identiques ou différents, de formule moyenne (III):
(A-CO-N=N-CO-Z)_{c} G²_{b} G¹ₐ Si O_{(4-a-b-c)/2}
dans laquelle :
- Z est un groupe de liaison divalent permettant de relier le groupe fonctionnel azo-dicarbonyle à un atome de silicium de l'organosiloxane ;
- A représente un radical hydrocarboné monovalent ou le groupement de formule Z' dans laquelle Z', identique à ou différent de Z, est un groupe de liaison divalent permettant de relier le groupe fonctionnel azo-dicarbonyle à un atome de silicium (identique ou différent de l'atome de Si relié à Z) de l'organosiloxane ;
- A, Z et le cas échéant Z' pouvant comporter, indépendamment, un ou plusieurs hétéroatomes.

4. Composition selon la revendication 3, l'organosiloxane étant constitué de motifs siloxyle, identiques ou différents, de formule moyenne (V):
G²_{b} G¹ₐ (A-CO-N=N-CO-Z) Si O_{(3-a-b)/2}
dans laquelle :
- a est un entier ou fractionnaire de 0 à 2;
- b est un entier ou fractionnaire de 1 à 2;
- (a+b) ≤ 2.

5. Composition selon la revendication 4, l'organosiloxane répondant à la formule (VII):
[(G⁰)₃SiO_{1/2}]ₘ [(G⁰)₂SiO_{2/2}]ₙ [G⁰SiO_{3/2}]ₒ [SiO_{4/2}]ₚ [(G²)_{b'}(G¹)_{a'}(A-CO-N=N-CO-Z)SiO_{(3-a'-b')/2}]_{q}
dans laquelle :
- a' représente un nombre entier choisi parmi 0, 1 et 2 ;
- b' représente un nombre entier choisi parmi 0, 1 et 2 ;
- la somme a'+b' se situe dans l'intervalle allant de 0 à 2 avec la condition selon laquelle quand b' = 0, alors au moins un des symboles G⁰ répond à la définition de G² ; et
o soit au moins un des m, n, o, p est un nombre entier ou fractionnaire différent de 0 (zéro) et q représente un nombre entier ou fractionnaire égal ou supérieur à 1 ;
o soit q est supérieur à 1 et alors chacun des m, n, o, p a une valeur quelconque ;
- les symboles G⁰, identiques ou différents, représentent chacun l'un des groupes correspondant à G² ou G¹.

6. Composition selon la revendication 5, dans laquelle la somme a' + b' est égal à 1 ou 2 ; m se situe dans l'intervalle de 1 à 2 ; n = o = p = 0 (zéro) et q = 1.

7. Composition selon la revendication 6, l'organosiloxane répondant à au moins l'une des formules (XI) ou (XII) (Et = éthyle) :
(XI) [Me₃SiO_{1/2}] [(EtO)₂ (A-CO-N=N-CO-Z)SiO_{1/2}]
(XII) [Me₃SiO_{1/2}]₂ [(EtO) (A-CO-N=N-CO-Z)SiO_{2/2}]

8. Composition selon l'une quelconque des revendications 1 à 7, l'organosiloxane étant un oligomère siloxane comportant de 2 à 20, de préférence de de 2 à 12 atomes de silicium.

9. Composition selon la revendication 7, le symbole A représentant le radical monovalent Et-O- et le symbole Z représente le radical divalent -NH-(CH2)₃- .

10. Composition selon l'une quelconque des revendications 1 à 9, dans laquelle :
- les radicaux G¹, identiques ou différents entre eux, sont choisis dans le groupe constitué par les groupes alkyle en C₁-C₆, cyclohexyle ou phényle ;
- les radicaux G², identiques ou différents entre eux, sont choisis dans le groupe constitué par les groupes hydroxyle, alkoxyles en C₁-C₈ et cycloalkoxyles en C₅-C₈.

11. Composition selon la revendication 10, dans laquelle :
- les radicaux G¹ sont choisis parmi les alkyles en C₁-C₄, de préférence parmi méthyle et éthyle ;
- les radicaux G² sont choisis parmi hydroxyle et alkoxyles en C₁-C₄, de préférence parmi hydroxyle, méthoxyle et éthoxyle.

12. Composition selon l'une quelconque des revendications 1 à 4 et 6 à 11, l'organosiloxane étant constitué de motifs siloxyle, identiques ou différents, de formule moyenne (VIII) :
G²_{b} G¹ₐ (R-O-CO-N=N-CO-Z) Si O(3-a-b)/2
dans laquelle :
- a, b, Z, G¹ et G² ont les définitions données supra ;
- R représente un alkyle en C1-C6, de préférence en C1-C4 (notamment méthyle ou éthyle).

13. Composition selon l'une quelconque des revendications 1 à 4 et 6 à 11, l'organosiloxane étant constitué de motifs siloxyle, identiques ou différents, de formule moyenne (IX) :
G²_{b} G¹ₐ (Z'-CO-N=N-CO-Z) Si O_{(3-a-b)/2}

14. Composition selon l'une quelconque des revendications 3 à 13, Z et le cas échéant Z' représentant un radical hydrocarboné divalent comportant de 1 à 18 atomes de carbone.

15. Composition selon l'une quelconque des revendications 2 à 14, dans laquelle :
- G¹ est le radical méthyle ou éthyle ;
- G² est le radical hydroxyle, méthoxyle ou éthoxyle ;
- Z (et le cas échéant Z') représente un radical hydrocarboné divalent comportant de 1 à 18 atomes de carbone, de préférence un alkylène en C₁-C₁₀.

16. Composition selon la revendication 15, dans laquelle :
- G¹ est le radical méthyle ;
- G² est le radical hydroxyle ou éthoxyle ;
- Z (et le cas échéant Z') est un alkylène en C₁-C₁₀ comportant un hétéroatome choisi de préférence parmi O, S et N.

17. Composition selon la revendication 16, dans laquelle Z (et le cas échéant Z') est un radical divalent choisi dans le groupe constitué par -(CH₂)_{y}- ; -NH-(CH₂)_{y}- ; -O-(CH₂)_{y}- ; y étant un entier de 1 à 6.

18. Pneumatique ou produit semi-fini pour pneumatique comportant une composition de caoutchouc selon l'une quelconque des revendications 1 à 17.

19. Bande de roulement de pneumatique comportant une composition comportant une composition de caoutchouc selon l'une quelconque des revendications 1 à 17.

20. Utilisation d'une composition de caoutchouc selon l'une quelconque des revendications 1 à 17, pour la fabrication d'un pneumatique ou d'un produit semi-fini pour pneumatique.

21. Procédé préparer une composition de caoutchouc destinée à la fabrication de pneumatiques ou de produits sémi-finis pour pneumatique, cette composition étant à base d'au moins un élastomère isoprénique, une charge inorganique à titre de charge renforçante, un agent de couplage organosiloxane polyfonctionnel assurant la liaison entre ladite charge inorganique renforçante et l'élastomère isoprénique, ledit procédé étant **caractérisé en ce que** qu'il comporte les étapes suivantes :
- incorporer à un élastomère isoprénique, au cours d'une première étape dite "non-productive", au moins une charge inorganique renforçante et la totalité ou une première partie de l'agent de couplage organosiloxane assurant la liaison entre ladite charge inorganique renforçante et l'élastomère isoprénique, en malaxant thermomécaniquement le tout, en une ou plusieurs fois, jusqu'à atteindre une température maximale comprise entre 110°C et 190°C ;
- refroidir l'ensemble à une température inférieure à 100°C;
- incorporer ensuite, au cours d'une seconde étape dite "productive", un système de réticulation et, le cas échéant, la seconde partie de l'agent de couplage ;
- malaxer le tout jusqu'à une température maximale inférieure à 120°C,
et **en ce que** ledit organosiloxane comporte par molécule, greffés sur ses atomes de silicium, d'une part au moins une fonction hydroxyle ou hydrolysable lui permettant de se greffer sur la charge inorganique renforçante, d'autre part, au moins un groupe porteur d'au moins un groupe fonctionnel azo-dicarbonyle -CO-N=N-CO- lui permettant de se greffer sur l'élastomère isoprénique.

## Claims

1. Rubber composition intended for the manufacture of tyres or of tyre semi-finished products, based on at least one isoprene elastomer, an inorganic filler as reinforcing filler and a polyfunctional organosiloxane coupling agent which provides the bonding between the said reinforcing inorganic filler and the isoprene elastomer, **characterized in that** the said organosiloxane comprises per molecule, grafted to its silicon atoms, on the one hand at least one hydroxyl or hydrolysable functional group allowing it to be grafted to the reinforcing inorganic filler and, on the other hand, at least one group bearing at least one azodicarbonyl functional group -CO-N=N-CO- allowing it to be grafted to the isoprene elastomer.

2. Composition according to Claim 1, the organosiloxane being composed of identical or different siloxyl units of average formula:
G³_{c}G²_{b}G¹ₐSiO_{(4-a-b-c)/2} (I)
in which:
- a, b and c are each whole or fractional numbers from 0 to 3;
- the G¹ radicals, which are identical or different if several are present, represent a monovalent hydrocarbon radical;
- the G² radicals, which are identical or different if several are present, represent a hydroxyl or hydrolysable group;
- the G³ radicals, which are identical or different if several are present, represent a group bearing the azodicarbonyl functional group (-CO-N=N-CO-),
with the proviso that:
- 0 < (a+b+c) ≤ 3;
- at least one G² radical (i.e., b ≥ 1) and at least one G³ radical (i.e., c ≥ 1) are present in the siloxane molecule.

3. Composition according to Claim 2, the organosiloxane being composed of identical or different siloxyl units of average formula (III):
(A-CO-N=N-CO-Z)_{c}G²_{b}G¹ₐSiO_{(4-a-b-c)/2}
in which:
- Z is a divalent bonding group connecting the azodicarbonyl functional group to a silicon atom of the organosiloxane;
- A represents a monovalent hydrocarbon radical or the group of formula Z' in which Z', which is identical to or different from Z, is a divalent bonding group which makes it possible to connect the azodicarbonyl functional group to a silicon atom (identical to or different from the Si atom connected to Z) of the organosiloxane;
- A, Z and if applicable Z', independently, may comprise one or more heteroatoms.

4. Composition according to Claim 3, the organosiloxane being composed of identical or different siloxyl units of average formula (V):
G²_{b}G¹ₐ(A-CO-N=N-CO-Z)SiO_{(3-a-b)/2}
in which:
- a is a whole or fractional number from 0 to 2;
- b is a whole or fractional number from 1 to 2;
- (a+b) ≤ 2.

5. Composition according to Claim 4, the organosiloxane corresponding to the formula (VII):
[(G⁰)₃SiO_{1/2}]ₘ [(G⁰)₂SiO_{2/2}]ₙ [G⁰SiO_{3/2}]ₒ [SiO_{4/2}]ₚ [(G²)_{b'}(G¹)_{a'}(A-CO-N=N-CO-Z)SiO_{(3-a'-b')/2}]_{q}
in which:
- a' represents an integer chosen from 0, 1 and 2;
- b' represents an integer chosen from 0, 1 and 2;
- the sum a'+b' lies within the range extending from 0 to 2, with the condition according to which, when b' = 0, then at least one of the G⁰ symbols corresponds to the definition of G²; and
o either at least one of the symbols m, n, o or p is a whole or fractional number other than 0 (zero) and q represents a whole or fractional number equal to or greater than 1;
o or q is greater than 1 and then each of the symbols m, n, o or p has any value;
- the G⁰ symbols, which are identical or different, each represent one of the groups corresponding to G² or G¹.

6. Composition according to Claim 5, in which the sum a' + b' is equal to 1 or 2; m lies within the range from 1 to 2; n = o = p = 0 (zero) and q = 1.

7. Composition according to Claim 6, the organosiloxane corresponding to at least one of the formulae (XI) and (XII) (Et = ethyl):
[Me₃SiO_{1/2}] [(EtO)₂ (A-CO-N=N-CO-Z)SiO_{1/2}] (XI)
[Me₃SiO_{1/2}]₂ [(EtO) (A-CO-N=N-CO-Z)SiO_{2/2}] (XII)

8. Composition according to any one of Claims 1 to 7, the organosiloxane being a siloxane oligomer comprising from 2 to 20, preferably from 2 to 12, silicon atoms.

9. Composition according to Claim 7, the A symbol representing the monovalent radical Et-O- and the Z symbol representing the divalent radical -NH-(CH₂)₃-.

10. Composition according to any one of Claims 1 to 9, in which:
- the G¹ radicals, which are identical to or different from one another, are chosen from the group consisting of C₁-C₆ alkyl groups, the cyclohexyl group and the phenyl group;
- the G² radicals, which are identical to or different from one another, are chosen from the group consisting of the hydroxyl group, C₁-C₈ alkoxyl groups and C₅-C₈ cycloalkoxyl groups.

11. Composition according to Claim 10, in which:
- the radicals G¹ are chosen from C₁-C₄ alkyls, preferably from methyl and ethyl;
- the radicals G² are chosen from hydroxyl and C₁-C₄ alkoxyls, preferably from hydroxyl, methoxyl and ethoxyl.

12. Composition according to any one of Claims 1 to 4 and 6 to 11, the organosiloxane being composed of identical or different siloxyl units of average formula (VIII):
G²_{b}G¹ₐ(R-O-CO-N=N-CO-Z) SiO_{(3-a-b)/2}
in which:
- a, b, Z, G¹ and G² have the definitions given above;
- R represents a C₁-C₆, preferably C₁-C₄, alkyl (in particular methyl or ethyl).

13. Composition according to any one of Claims 1 to 4 and 6 to 11, the organosiloxane being composed of identical or different siloxyl units of average formula (IX):
G²_{b}G¹ₐ(Z'-CO-N=N-CO-Z)SiO_{(3-a-b)/2}

14. Composition according to any one of Claims 3 to 13, Z and, if applicable, Z' representing a divalent hydrocarbon radical comprising from 1 to 18 carbon atoms.

15. Composition according to any one of Claims 2 to 14, in which:
- G¹ is the methyl or ethyl radical;
- G² is the hydroxyl, methoxyl or ethoxyl radical;
- Z (and, if applicable, Z') represents a divalent hydrocarbon radical comprising from 1 to 18 carbon atoms, preferably a C₁-C₁₀ alkylene.

16. Composition according to Claim 15, in which:
- G¹ is the methyl radical;
- G² is the hydroxyl or ethoxyl radical;
- Z (and, if applicable, Z') is a C₁-C₁₀ alkylene comprising a heteroatom preferably chosen from O, S and N.

17. Composition according to Claim 16, in which Z (and, if applicable, Z') is a divalent radical chosen from the group consisting of -(CH₂)_{y}-, -NH-(CH₂)_{y}- and -O-(CH₂)_{y}-, y being an integer from 1 to 6.

18. Tyre or tyre semi-finished product, comprising a rubber composition according to any one of Claims 1 to 17.

19. Tyre tread, comprising a rubber composition according to any one of Claims 1 to 17.

20. Use of a rubber composition according to any one of Claims 1 to 17 for the manufacture of a tyre or of a tyre semi-finished product.

21. Process for preparing a rubber composition intended for the manufacture of tyres or of tyre semi-finished products, this composition being based on at least one isoprene elastomer, an inorganic filler as reinforcing filler and a polyfunctional organosiloxane coupling agent which provides the bonding between the said reinforcing inorganic filler and the isoprene elastomer, the said process being **characterized in that** it comprises the following stages:
- incorporating in an isoprene elastomer, during a first "nonproductive" stage, at least one reinforcing inorganic filler and all or a first portion of the organosiloxane coupling agent which provides the bonding between the said reinforcing inorganic filler and the isoprene elastomer, the combined mixture being kneaded thermomechanically, in one or more stages, until a maximum temperature of between 110°C and 190°C is reached;
- cooling the mixture to a temperature of less than 100°C;
- subsequently incorporating, during a second "productive" stage a crosslinking system and, if applicable, the second portion of the coupling agent;
- kneading the entire mixture until a maximum temperature of less than 120°C is reached,
and **in that** the said organosiloxane comprises per molecule, grafted to its silicon atoms, on the one hand at least one hydroxyl or hydrolysable functional group allowing it to be grafted to the reinforcing inorganic filler and, on the other hand, at least one group bearing at least one azodicarbonyl functional group -CO-N=N-CO- allowing it to be grafted to the isoprene elastomer.

## Patentansprüche

1. Kautschukzusammensetzung zur Herstellung von Reifen oder halbfertigen Produkten für Reifen, auf Basis mindestens eines isoprenartigen Elastomers, eines anorganischen Füllstoffs als Verstärkungsmittel, eines polyfunktionellen Organosiloxan-Kupplungsmittels, welches die Bindung zwischen dem anorganischen verstärkenden Füllstoff und dem isoprenartigen Elastomer sicherstellt, **dadurch gekennzeichnet, dass** das Organosiloxan pro Molekül, und zwar auf seine Siliziumatome gepfropft, einerseits mindestens eine Hydroxylgruppe oder hydrolysierbare Gruppe aufweist, mittels derer es sich auf den anorganischen verstärkenden Füllstoff pfropfen kann, und andererseits mindestens eine Gruppe, welche mindestens eine funktionelle Azodicarbonylgruppe -CO-N=N-CO- trägt, mittels derer es sich auf das isoprenartige Elastomer pfropfen kann.

2. Zusammensetzung nach dem Anspruch 1, wobei das Organosiloxan aus Siloxylgruppen besteht, die vollkommen gleichartig oder verschiedenartig sind, und im Mittel folgende Formel aufweist:
(I) G³_{c}G²_{b}G¹ₐSiO_{(4-a-b-c)/2}
wobei:
- a, b und c jeweils ganze Zahlen oder Bruchzahlen von 0 bis 3 sind;
- die Reste G¹, welche, falls mehrere davon vorhanden sind, vollkommen gleichartig oder verschiedenartig sind, einen einwertigen Kohlenwasserstoffrest darstellen;
- die Reste G², welche, falls mehrere davon vorhanden sind, vollkommen gleichartig oder verschiedenartig sind, eine Hydroxylgruppe oder eine hydrolysierbare Gruppe darstellen;
- die Reste G³, welche, falls mehrere davon vorhanden sind, vollkommen gleichartig oder verschiedenartig sind, eine Gruppe darstellen, welche die funktionelle Azodicarbonylgruppe (-CO-N=N-CO-) trägt;
mit der Maßgabe, dass:
- 0 < (a+b+c) ≤ 3;
- das Siloxanmolekül mindestens einen G²-Rest (d.h. b ≥ 1) und mindestens einen G³-Rest (d.h. c ≥ 1) aufweist.

3. Zusammensetzung nach dem Anspruch 2, wobei das Organosiloxan aus Siloxylgruppen besteht, die vollkommen gleichartig oder verschiedenartig sind, und im Mittel die folgende Formel (III) aufweist:
(A-CO-N=N-CO-Z)_{c} G²_{b} G¹ₐ SiO_{(4-a-b-c)/2}
wobei:
- Z eine zweiwertige Verbindungsgruppe ist, mittels derer die funktionelle Azodicarbonylgruppe mit einem Siliziumatom des Organosiloxans verbunden werden kann;
- A für einen einwertigen Kohlenwasserstoffrest oder für eine Gruppe mit der Formel Z' steht, wobei Z', welches vollkommen gleichartig oder verschiedenartig von Z sein kann, eine zweiwertige Verbindungsgruppe ist, mittels derer die funktionelle Azodicarbonylgruppe mit einem Siliziumatom (welches mit dem Si-Atom, das mit Z verbunden ist, überstimmen kann oder nicht) des Organosiloxans verbunden werden kann;
- A, Z und gegebenenfalls Z' unabhängig voneinander ein oder mehrere Heteroatome aufweisen können.

4. Zusammensetzung nach dem Anspruch 3, wobei das Organosiloxan aus Siloxylgruppen besteht, die vollkommen gleichartig oder verschiedenartig sind, und im Mittel die folgende Formel (V) aufweist:
G²_{b} G¹ₐ (A-CO-N=N-CO-Z) SiO_{(3-a-b)/2}
wobei:
- a eine ganze Zahl oder eine Bruchzahl von 0 bis 2 ist;
- b eine ganze Zahl oder eine Bruchzahl von 1 bis 2 ist;
- (a+b) ≤ 2.

5. Zusammensetzung nach dem Anspruch 4, wobei das Organosiloxan der folgenden Formel (VII) entspricht:
[(G⁰)₃SiO_{1/2}]ₘ [(G⁰)₂SiO_{2/2}]ₙ [G⁰SiO_{3/2}]ₒ [SiO_{4/2}]ₚ [(G²)_{b'}(G¹)_{a'}(A-CO-N=N-CO-Z)SiO_{(3-a'-b')/2}]_{q}
wobei:
- a' für eine ganze Zahl steht, die aus 0, 1 und 2 gewählt ist;
- b' für eine ganze Zahl steht, die aus 0, 1 und 2 gewählt ist;
- die Summe a'+b' innerhalb des Intervalls von 0 bis 2 liegt, mit der Maßgabe, dass
mindestens eines der Formelzeichen G⁰ der Begriffsbestimmung für G² entspricht, wenn b' = 0 ist; und
o entweder mindestens eines der Formelzeichen m, n, o, p eine ganze Zahl oder eine Bruchzahl ist, die ungleich 0 (null) ist, und q für eine ganze Zahl oder eine Bruchzahl steht, die größer oder gleich 1 ist;
o oder q größer als 1 ist und jedes der Formelzeichen m, n, o, p einen beliebigen Wert annimmt;
- die Formelzeichen G⁰, die vollkommen gleichartig oder verschiedenartig sind, jeweils für eine der Gruppen stehen, die G² oder G¹ entsprechen.

6. Zusammensetzung nach dem Anspruch 5, wobei die Summe a' + b' gleich 1 oder 2 ist; m innerhalb des Intervalls von 1 bis 2 liegt; n = o = p = 0 (null) ist und q = 1.

7. Zusammensetzung nach dem Anspruch 6, wobei das Organosiloxan mindestens einer der folgenden Formeln (XI) oder (XII) entspricht (Et = Ethyl):
(XI) [Me₃SiO _{1/2}] [(EtO)₂ (A-CO-N=N-CO-Z)SiO_{1/2}]
(XII) [Me₃SiO _{1/2}]₂ [(EtO) (A-CO-N=N-CO-Z)SiO_{2/2}]

8. Zusammensetzung nach einem beliebigen der Ansprüche 1 bis 7, wobei es sich bei dem Organosiloxan um ein Siloxanoligomer handelt, das 2 bis 20, vorzugsweise 2 bis 12, Siliziumatome aufweist.

9. Zusammensetzung nach dem Anspruch 7, wobei das Formelzeichen A für einen einwertigen Et-O-Rest steht und das Formelzeichen Z für einen zweiwertigen -NH-(CH₂)₃-Rest.

10. Zusammensetzung nach einem beliebigen der Ansprüche 1 bis 9, wobei:
- die G¹-Reste, die untereinander vollkommen gleichartig oder verschiedenartig sind, aus der Gruppe gewählt sind, die aus den Gruppen C₁-C₆-Alkyl, Cyclohexyl und Phenyl besteht;
- die G²-Reste, die untereinander vollkommen gleichartig oder verschiedenartig sind, aus der Gruppe gewählt sind, die aus den Gruppen Hydroxyl, C₁-C₈-Alkoxyle und C₅-C₈-Cycloalkoxyle besteht.

11. Zusammensetzung nach dem Anspruch 10, wobei:
- die G¹-Reste aus den C₁-C₄-Alkylen gewählt sind, vorzugsweise aus Methyl und Ethyl;
- die G²-Reste aus Hydroxyl und den C₁-C₄-Alkoxylen gewählt sind, vorzugsweise aus Hydroxyl, Methoxyl und Ethoxyl;

12. Zusammensetzung nach einem beliebigen der Ansprüche 1 bis 4 und 6 bis 11, wobei das Organosiloxan aus Siloxylgruppen besteht, die vollkommen gleichartig oder verschiedenartig sind, und im Mittel die folgende Formel (VIII) aufweist:
G²_{b} G¹ₐ (R-O-CO-N=N-CO-Z) SiO(3-a-b)/2
wobei:
- a, b, Z, G¹ und G² den obigen Begriffsbestimmungen entsprechen;
- R für ein C₁-C₆-Alkyl steht, vorzugsweise aus dem Bereich C₁-C₄, (insbesondere für Methyl oder Ethyl).

13. Zusammensetzung nach einem beliebigen der Ansprüche 1 bis 4 und 6 bis 11, wobei das Organosiloxan aus Siloxylgruppen besteht, die vollkommen gleichartig oder verschiedenartig sind, und im Mittel die folgende Formel (IX) aufweist:
G²_{b} G¹ₐ (Z'-CO-N=N-CO-Z) SiO_{(3-a-b)/2}

14. Zusammensetzung nach einem beliebigen der Ansprüche 3 bis 13, wobei Z und gegebenenfalls Z' für einen zweiwertigen Kohlenwasserstoffrest stehen, der 1 bis 18 Kohlenstoffatome aufweist.

15. Zusammensetzung nach einem beliebigen der Ansprüche 2 bis 14, wobei:
- G¹ ein Methyl- oder Ethylrest ist;
- G² ein Hydroxyl-, Methoxyl- oder Ethoxylrest ist;
- Z (und gegebenenfalls Z') für einen zweiwertigen Kohlenwasserstoffrest stehen, der 1 bis 18 Kohlenstoffatome aufweist, wobei es sich vorzugsweise um ein C₁-C₁₀-Alkylen handelt.

16. Zusammensetzung nach dem Anspruch 15, wobei:
- G¹ ein Methylrest ist;
- G² ein Hydroxyl- oder Ethoxylrest ist;
- es sich bei Z (und gegebenenfalls Z') um ein C₁-C₁₀-Alkylen handelt, welches ein Heteroatom aufweist, das vorzugsweise aus O, S und N gewählt ist.

17. Zusammensetzung nach dem Anspruch 16, wobei es sich bei Z (und gegebenenfalls Z') um einen zweiwertigen Rest handelt, der aus der Gruppe gewählt ist, die aus -(CH₂)_{y}-; -NH-(CH₂)_{y}-; -O-(CH₂)_{y}- besteht; wobei y eine ganze Zahl von 1 bis 6 ist.

18. Reifen oder halbfertiges Produkt für Reifen, welcher/welches eine Kautschukzusammensetzung nach einem beliebigen der Ansprüche 1 bis 17 aufweist.

19. Reifenlauffläche, die eine Zusammensetzung aufweist, welche eine Kautschukzusammensetzung nach einem beliebigen der Ansprüche 1 bis 17 aufweist.

20. Verwendung einer Kautschukzusammensetzung nach einem beliebigen der Ansprüche 1 bis 17 zur Herstellung eines Reifens oder eines halbfertigen Produktes für Reifen.

21. Verfahren zur Herstellung einer Kautschukzusammensetzung zur Herstellung von Reifen oder halbfertigen Produkten für Reifen, wobei diese Zusammensetzung auf mindestens einem isoprenartigen Elastomer, einem anorganischen Füllstoff als Verstärkungsmittel sowie einem polyfunktionellen Organosiloxan-Kupplungsmittel, welches die Bindung zwischen dem anorganischen verstärkenden Füllstoff und dem isoprenartigen Elastomer sicherstellt, basiert, wobei das Verfahren **dadurch gekennzeichnet ist, dass** es die folgenden Schritte aufweist:
- in einem ersten Schritt, der als "nicht der Herstellung dienend" bezeichnet wird, Einarbeiten mindestens eines anorganischen verstärkenden Füllstoffs sowie der Gesamtheit oder eines Teils des Organosiloxan-Kupplungsmittels, welches die Bindung zwischen dem anorganischen verstärkenden Füllstoff und dem isoprenartigen Elastomer sicherstellt, in das isoprenartige Elastomer, indem das Ganze thermomechanisch durchmischt wird, bis eine Höchsttemperatur erreicht wird, die im Bereich von 110 °C bis 190 °C liegt;
- Abkühlen des Gesamtansatzes auf eine Temperatur von weniger als 100 °C;
- in einem zweiten Schritt, der als "der Herstellung dienend" bezeichnet wird und im Anschluss durchgeführt wird, Einarbeiten eines Vernetzungssystems und gegebenenfalls des zweiten Teils des Kupplungsmittels;
- Durchmischen des Ganzen bis zu einer Höchsttemperatur von weniger als 120 °C,
und **dadurch**, dass das Organosiloxan pro Molekül, und zwar auf seine Siliziumatome gepfropft, einerseits mindestens eine Hydroxylgruppe oder hydrolysierbare Gruppe aufweist, mittels derer es sich auf den anorganischen verstärkenden Füllstoff pfropfen kann, und andererseits mindestens eine Gruppe, welche mindestens eine funktionelle Azodicarbonylgruppe -CO-N=N-CO- trägt, mittels derer es sich auf das isoprenartige Elastomer pfropfen kann.
